# EUROPEAN PATENT APPLICATION

(11) **EP 2 866 184 A1**
(43) Date of publication of application: **29.04.2015**
(21) Application number: 14187392.7
(22) Date of filing: 01.10.2014
(51) Int. Cl.: G06Q 30/02

(54) **Real-time local offer targeting and delivery system**

(30) Priority: 25.10.2013 US 201314064039
(71) Applicant: Palo Alto Research Center Incorporated, Palo Alto, California 94304 (US)
(72) Inventor: Lee, Lawrence C., Palo Alto, CA California 94301 (US); Brdiczka, Oliver, Mountain View, CA California 94304 (US); Torres, Francisco E., San Jose, CA California 95120 (US); Holmes, Chris, Redwood City, CA California 94061 (US); Glasnapp, James D., South San Francisco, CA California 94080 (US); Nash, Michael C., Emerald Hills, CA California 94062 (US); Perelson, Andrew J., Putnam Valley, NY New York 10579 (US)
(74) Representative: Lord, Michael

(57) **Abstract**

One embodiment of the present invention provides a system for delivering an offer to a mobile device associated with a potential customer. During operation, the system receives data indicating that a potential customer is at or entering a targeted area or is on a vehicle associated with one or more businesses providing offers. The system then determines, with the received data, whether the potential customer has a moment of receptivity, wherein the moment of receptivity is a period of time during which the potential customer is likely to be receptive to receiving an offer. Responsive to determining that the potential customer has a moment of receptivity for receiving an offer, the system selects an offer from one or more available offers, and sends the selected offer to the potential customer.

## Description

### BACKGROUND

### Field

The present disclosure relates to mobile marketing. More specifically, this disclosure relates to a method and system for precise targeting and delivery of local offers from merchants.

### Related Art

Currently local merchants have limited options to accurately target local customers with relevant offers. They may use promotional channels such as television and radio broadcast slots, coupons in local newspapers and circulars, and manually distributed flyers in a neighborhood. There are also a few online advertising channels, such as local news and community sites.

Localized group coupon providers, such as Groupon, revolutionized the local advertising scene by selling offers from local merchants in the form of vouchers that customers could buy at a discounted price. Soon after, a number of similar "daily deal" services appeared, which flooded users' email inboxes with offers to buy these discounted vouchers.

The problem with these channels, including daily deal sites, is that merchants have little control over the targeting and distribution of the offers. Merchants might have some knowledge about the demographics for the audience of television, radio, and newspapers, but they cannot be sure of the actual number of people that viewed or heard the promotion. Online sites have better metrics of impressions and clicks, but it is difficult to predict when customers will actually come into the merchant's store or restaurant to redeem a coupon or voucher.

This unpredictability remains a problem for daily deal sites. Merchants have little control over who buys the vouchers and when they will redeem them. There are many instances where merchants are flooded with vouchers on Friday and Saturday nights, which are their most profitable times, with these customers crowding out more profitable customers. Merchants are much more interested in attracting new customers during off-peak times when they have excess capacity.

A second problem of daily deal sites is the low conversion rate from trial to repeat customers. The daily deal model often requires that merchants take a loss on the voucher-related transaction, with the hope and expectation that the customer will turn into a repeat customer who comes back and pays full price going forward. However, many voucher redeemers are unlikely to convert to repeat customers because many are just looking for a deal and travel out of their normal travel patterns in order to do so.

Some approaches to targeting customers include applications that aggregate deals into a digital coupon book. Others such as Yelp or Foursquare provide offers when the customer searches for particular merchant categories in their vicinity. AT&T has a service which texts the customer relevant offers based on their location. However, these various approaches also do not adequately address the problems of low conversion rate and customers visiting merchants at inopportune times to redeem their offers.

### SUMMARY

One embodiment of the present invention provides a system for delivering an offer to a mobile device associated with a potential customer. During operation, the system initially receives data indicating that a potential customer is at or entering a targeted area or is on a vehicle associated with one or more businesses providing offers. The system determines, with the received data, whether the potential customer has a moment of receptivity, wherein the moment of receptivity is a period of time during which the potential customer is likely to be receptive to receiving an offer. Responsive to determining that the potential customer has a moment of receptivity for receiving an offer, the system selects an offer from one or more available offers, and sends the selected offer to the potential customer.

In a variation on this embodiment, selecting an offer includes determining whether the potential customer has a duration of time during which the potential customer has an opportunity to act on the offer. The system determines whether there are one or more available offers that are each associated with a respective cycle time that is of a duration less than or equal to the duration of time during which the potential customer has the opportunity to act on the offer, wherein the cycle time is the sum of time required to arrive at a respective business location associated with an offer plus the time required to perform a purchase transaction with the offer. Subsequently, the system selects an offer associated with a cycle time with duration less than or equal to the duration of time during which the potential customer has the opportunity to act on the offer.

In a further variation, determining whether the potential customer has a moment of receptivity for receiving an offer and/or a duration of time during which the potential customer has an opportunity to act on the offer includes receiving data from a transit system server indicating that the potential customer has paid a fare to board a vehicle or to enter a paid transit zone and at least one of: receiving data indicating that a public transportation vehicle is delayed, estimating that the potential customer must wait for the public transportation vehicle for a period of time, or receiving data indicating that the potential customer is waiting on the vehicle while the vehicle is in motion.

In a further variation, the system also classifies merchants and/or offers based on cycle time to facilitate selection of offers with respective cycle times that are less than or equal to the duration of time during which the potential customer has the opportunity to act on the offer.

In a further variation, determining whether the potential customer has a moment of receptivity for receiving an offer includes receiving transit route data to predict a location of the potential customer and using geofencing data from an application executing on a mobile device to confirm the potential customer is at the location and at least one of: receiving data indicating that a public transportation vehicle is delayed, or estimating that the potential customer must wait for the public transportation vehicle for a period of time.

Another embodiment of the present invention provides a system for delivering an offer to a mobile device associated with a potential customer. The system initially obtains data regarding the potential customer's upcoming activity and location and time associated with the activity. During operation, the system determines whether the potential customer has a present or upcoming moment of receptivity for receiving an offer, wherein the moment of receptivity is a period of time during which the potential customer is likely to be receptive to receiving an offer. Responsive to determining that the potential customer has a present or upcoming moment of receptivity for receiving an offer, the system selects an offer from one or more offers, and sends and/or schedules to send the selected offer to the potential customer during the moment of receptivity for receiving an offer.

In a variation on this embodiment, selecting an offer includes determining whether the potential customer has a moment of receptivity for acting on an offer during the upcoming activity. The system then determines whether a time of occurrence associated with the moment of receptivity for acting on an offer is within a validity time period of one or more offers, wherein the validity time period is associated with a start time and an end time. The system determines whether the one or more offers are each associated with a respective cycle time that is less than or equal to a time duration associated with the moment of receptivity for acting on an offer, wherein the respective cycle time is the sum of time required to arrive at a respective business location associated with an offer plus the time required to perform a purchase transaction with the offer. The system selects an offer with a cycle time with duration less than or equal to the time duration associated with the moment of receptivity for acting on an offer.

In a variation on this embodiment, the upcoming activity is riding public transportation, and the moment of receptivity for acting on an offer is associated with a delay in the public transportation schedule.

Yet another embodiment of the present invention provides brokering services for a merchant. The system initially receives data regarding potential customers' movement and location data. During operation, the system receives, from the merchant, offer parameters that include one or more of a distance measured from a merchant business location, discounted price, and a validity time period for an offer. The system computes potential customers' distances from the merchant business location based on the potential customers' movement and location data. The system also compute a frequency that potential customers approach the merchant business location within the distance specified by the merchant, and a probability that a specific number of customers will redeem the offer during the validity time period of the offer at the discounted price. Subsequently, the system determines a promotional cost for the merchant based on a tiered cost structure, wherein the promotional cost is higher when the frequency increases and/or the distance decreases and/or the probability increases and/or specific number of customers increases. The system then sends, to the merchant, the frequency, the probability, the specific number of customers, and promotional cost.

In a variation on this embodiment, the system receives input from the merchant adjusting the offer parameters, and computes an estimated number of customers that will redeem the offer based on the adjusted offer parameters. The system then computes a new promotional cost, and sends, to the merchant, the estimated number of customers that will redeem the offer and the new promotional cost.

In a variation on this embodiment, the system also receives a requested average number of customers, minimum number of customers, and/or maximum number of customers. The system computes a set of offer parameters that will yield one of the average number of customers, minimum number of customers, or maximum number of customers that are estimated to redeem the offer. The system then computes a new promotional cost, and sends, to the merchant, the new promotional cost and the computed set of offer parameters.

### BRIEF DESCRIPTION OF THE FIGURES

FIG. 1 presents a block diagram illustrating an exemplary architecture of a local offer targeting and delivery system, according to an embodiment.
FIG. 2 presents a flowchart illustrating an overview of an exemplary process for local offer targeting, according to an embodiment.
FIG. 3 presents a flowchart illustrating an exemplary process for receiving and storing merchant offer data, according to an embodiment.
FIG. 4 presents a flowchart illustrating an exemplary process for sending an offer to a potential customer in real-time mode, according to an embodiment.
FIG. 5 presents a flowchart illustrating an exemplary process for sending an offer in anticipated targeting mode, according to an embodiment.
FIG. 6 presents a flowchart illustrating an exemplary process executed after a customer redeems an offer, according to an embodiment.
FIG. 7 presents a flowchart illustrating an exemplary process to provide brokering and/or analytics services for a merchant, according to an embodiment.
FIG. 8 presents a block diagram illustrating an exemplary apparatus for local offer targeting and delivery, in accordance with an embodiment
FIG. 9 illustrates an exemplary computer system that facilitates local offer targeting and delivery, in accordance with an embodiment.
FIG. 10 illustrates an exemplary computer system that receives local offers, in accordance with an embodiment.

In the figures, like reference numerals refer to the same figure elements.

### DETAILED DESCRIPTION

The following description is presented to enable any person skilled in the art to make and use the embodiments, and is provided in the context of a particular application and its requirements. Various modifications to the disclosed embodiments will be readily apparent to those skilled in the art, and the general principles defined herein may be applied to other embodiments and applications without departing from the spirit and scope of the present disclosure. Thus, the present invention is not limited to the embodiments shown, but is to be accorded the widest scope consistent with the principles and features disclosed herein.

### Overview

Embodiments of the present invention solve the problems of assisting merchants to increase business during slow periods, expand business hours, and attract repeating customers by allowing merchants to target offers at potential customers with temporal and geographical precision. These potential customers are typically transit riders who are near a merchant's place of business and can feasibly arrive at the merchant's place of business during a validity time period of an offer and complete a purchase transaction during their free time. The potential customers may also be motorists that have parking applications installed on their mobile devices or that have enrolled in electronic toll systems. An offer can be a coupon for a subsequent purchase discount or a voucher one purchases to subsequently redeem for a discounted product and/or service. A validity time period is a period of time associated with an offer during which a customer may redeem the offer. Validity time periods are associated with a start time and an end time. Merchants may specify the validity time period of the offer with fine-grained granularity, thereby enabling them to increase the number of customers during their traditionally slow business hours. Customers benefit from the discounts received from redeeming the offer, and transit agencies (or other transportation entities) may reduce congestion by collaborating with merchants to get transit riders off public transportation systems during rush hour and into the merchants' businesses.

A local offer targeting and delivery system as disclosed herein may provide targeting, delivery, analytics, and/or brokering functions for merchants. Targeting and delivery involves determining who will receive offers, when they receive the offers, and what offers they will receive. Analytics and brokering allows merchants to choose the combination of offer parameters and targeted customers that is best suited for their business needs. A recommendation entity may make these functions available to merchants, and potential customers can opt in to receive the offers that are relevant to them from the merchants. The recommendation service is provided by a business entity that implements and makes available the local offer targeting and delivery service using one or more servers or partner services, and collects revenue from merchants for their services. Note that embodiments of the present invention may include any business model and revenue may be collected according to different business models.

The system can target offers at potential customers according to different modes. Two basic modes are real-time targeting mode and anticipated targeting mode. Real-time targeting mode generally assesses a potential customer's current situation and the system sends offers that the potential customer can use immediately. Anticipated targeting mode assesses a potential customer's predicted or scheduled upcoming events, and sends offers that the potential customer may use immediately or in the future. Variations of these basic modes are also possible, and some of these variations are discussed below.

With real-time targeting mode, the system sends offers to potential customers located around transportation points such as bus stations and train stations or parking lots or retail areas when such customers have a moment of receptivity for receiving an offer. A moment of receptivity for receiving an offer is a period of time during which the potential customer is likely to be receptive to receiving an offer. A moment of receptivity for acting on the offer is a period of time during which the potential customer has the opportunity to act on the offer. For example, a transit rider may have a moment of receptivity for receiving an offer when he or she is riding a transit line, and there are a few minutes before the transit line arrives at a destination. Examples of moments of receptivity for receiving offers can also include a person waiting for a transit line, or a person using transportation and purchasing according to a pattern that makes him or her a suitable candidate for receiving an offer. For example, a person may have a moment of receptivity for receiving an offer at 6:30 AM if, when the person arrives at a transit area at 6:30 AM, the person often eats at a local restaurant at 11:30 AM.

During a moment of receptivity for receiving an offer, the transit rider may be more open to receiving offers, even those that are less relevant to their personal preferences or needs. These transit riders may be more impulsive and willing to redeem the offers that they receive, and even to try a new product or experience advertised by the offers. A potential customer can act on an offer by visiting the merchant's place of business to buy a product and/or service. An example of the moment of receptivity for acting on an offer is when a person has a delay in their commuting schedule, which allows him or her to have a period of free time to visit the merchant's place of business and perform a purchase transaction.

The system can identify and quantify a moment of receptivity for receiving an offer and/or acting on an offer by analyzing real-time transit status data for estimated wait times, transit usage times, movement and purchase patterns, and other data. For example, the system can receive data indicating that a user enters a subway station by interfacing with a fare collection system at the station. The system can also infer that the potential customer enters a subway station based on geofencing with global positioning satellite (GPS) data from the user's mobile device. Geofencing allows one to define virtual boundaries for real-world geographical areas. Geofencing may use GPS or radio frequency identification (RFID) to define such virtual boundaries. The system may infer a potential customer's destination by combining geofencing with real-time transit data indicating that a potential customer has paid a fare and is riding a transit line. These inferences may work well with above-ground transit. With real-time status data for a potential customer's intended subway train, the system can also estimate the amount of waiting time for the user. In regular operations, the wait time might be 5 to 15 minutes, but in delay situations, the wait time might be longer, such as 30 minutes or even a hour. This wait time is an example of the moment of receptivity for receiving an offer and/or acting on an offer. Note that geofencing applications executing on a mobile device can drain battery power. The system may conserve power usage by using transit route data to predict a location of the potential customer and using geofencing data from an application executing on a mobile device to confirm the potential customer is at the location.

The system may also determine the destination of a potential customer riding in a taxi by using destination data received from a taxi vehicle. A taxi driver can enter a destination into a GPS system, and the GPS system sends the destination data to the system.

Transit riders with regular travel patterns not only experience moments of receptivity, but have a good likelihood of becoming repeat customers once they redeem an offer. People riding public transportation typically will pass by the same set of merchants, whether on a daily basis or semi-regular basis. These transit riders usually will pass by the same set of merchants often enough that there is a higher probability they will become repeat customers. In contrast, people who have to travel out of their normal patterns just to enjoy a good deal are less likely to become repeat customers.

The system can send offers to potentially receptive transit riders even if the system has no history information regarding the transit riders. The system may send offers to those transit riders that can feasibly complete a purchase transaction during their moment of receptivity for acting on an offer, based on an estimated cycle time associated with the offer's product and/or service. A cycle time is generally the sum of the estimated time required for the potential customer to arrive at the merchant's business location plus the estimated time required for performing the purchase transaction. For example, the typical cycle time to get a coffee and pastry at a café in the station might be 20 minutes during 7-9 am, which includes walking (5 minutes), waiting and purchasing (15 minutes), and only 10 minutes during all other times when the café is open (walking requires 5 minutes plus purchasing requires 5 minutes). The feasibility of a transit rider completing a purchase transaction during the transit rider's moment of receptivity serves as a practical basis for sending the offer to the transit rider. Existing recommendation systems typically do not have a practical basis to recommend useful, local offers to new potential customers if they have no history information regarding the potential customers.

Potential customers include anyone with a mobile device that can install a local offer application. Transit riders may have an incentive to install such a local offer application because it may provide real-time information regarding departure and arrival times for public transportation such as buses, trains, light rail, etc, and it may be an official mobile application of the transit agency. In addition, the local offer application also receives and displays the offers specifically selected for the transit rider.

Merchants may specify the specific validity time period of their coupons with fine-grained granularity, on the order of minutes and hours, rather than weeks and months as in other systems. For example, a restaurant may specify that their coupons are valid between the hours of between 2 PM and 5 PM, when the restaurant is usually empty. In contrast, current advertising systems only allow merchants to specify expiration dates with coarse grained granularity (e.g., a few days, one week, or a few months). By offering fine-grained temporal control, merchants may have better control over when customers visit their businesses. Merchants may limit the validity time period of the promotional offers to the hours that usually have the least number of customers. Since merchants typically have set costs associated with rent, employee salaries, insurance, and other costs, it is to their benefit to try to bring in customers during their least busy hours.

With anticipated targeting mode, the system acquires information regarding a potential customer's anticipated events or activities, including riding on public transportation and/or other activities, such as celebrating an anniversary or eating dinner. The system sends offers to the potential customer in anticipation of moments of receptivity during the customer's predicted or scheduled future events. For example, the system may send an offer for a dinner special at a restaurant near a potential customer's office before she leaves home in the morning. The system may acquire data regarding the anticipated activities from a to do list or a task reminder list, or some calendaring application accessible to or integrated with the system. The system may also learn a potential customer's typical travel or commuting patterns and acquire from the transit agency real-time data indicating delays in a potential customer's anticipated commute route. Such delays may also serve as moments of receptivity in this anticipated targeting mode. The system may also analyze the to do list/task reminder list, and send directions from the office/home to the locations where items from the to do list/task reminder list can be fulfilled. Merchants may also send offers based on their being located along the route.

The system can identify a time associated with a decision-making process as a moment of receptivity for receiving an offer, and send an offer at that time, in advance of a validity time period/expiration period. For example, the system may identify a time early in the morning or night time as a time that the potential customer decides on dinner. During this time, the potential customer may coordinate dinner plans with his or her family. This decision time is the potential customer's moment of receptivity for receiving an offer. When the potential customer is deciding on dinner, the system may send a restaurant offer (e.g., a discount off a take-out meal) that is valid during the hours of 5-6 PM to the potential customer. The potential customer may then redeem the offer during the validity time period of 5-6 PM. Furthermore, the system can also send an offer to the potential customer that may prompt the potential customer to alter his or her transportation plans.

The system may also provide merchants with intelligent brokering services that include real-time, interactive feedback on the results merchants will obtain with different offer parameters. The system may access real-time data on locations of potential customers and/or their upcoming activities and locations. With this data, the system may provide instant feedback to the merchant such as if they lower the price by a certain amount, then the merchant will receive an estimated additional number of customers.

In some implementations, back-end server 102 can learn the merchant's utility function. A utility function maps offer parameters to a real number (e.g., promotional cost, estimated number of customers, or some other measurement value). Back-end server 102 can adjust the offer parameters based on the real number, in order to suggest useful combinations of offer parameters to the merchant. There may also be a tool for merchants to iteratively explore different combinations of offer parameters.

Over time, the system can also learn about a potential customer's preferences based on interactions with the system, such as which offers the potential customer has opened and read, and which ones he or she actually redeemed or purchased, and use this data to inform another model within the recommendation engine to improve offer targeting even further.

Transit agencies may participate in a local targeting and delivery system for a number of reasons. The transit agency may be seeking additional revenue streams. They want to profit from sharing the data that reveals transit riders' riding patterns, including time and location. The transit agency may want to reduce congestion by giving transit riders an incentive to delay boarding public transit during rush hour. Instead, the transit riders may receive a coupon and visit a café or some other merchant, freeing up space on trains and buses. Also, the transit agency may improve their relationship with transit riders by establishing a relationship with each rider and providing special promotional benefits to riders through the merchants.

The transit agency may choose to subsidize some of the merchant's costs for running a promotion in order to reduce transportation congestion. For example, the transit agency may decide to pay for some of the restaurant's costs for promotion of coupons valid during the train schedule's rush hour, if that time period also coincides with the restaurant's busiest hours. This may provide an incentive for some people to take a later train or bus, instead of taking the train or bus during rush hour. When a customer redeems a coupon, the merchant may transfer a portion of the revenues to the recommendation entity, which may also share some revenue with the transit agency.

The transit agency can provide information on transit riders' historical patterns or real-time data as they board a specific bus or train. The transit agency's location data derived from electronic fare collection at the station (or vehicle) entry/exit in combination with geofencing can provide information on a transit rider's location when they are traveling inside a station or subway. The transit agency can detect and provide data that indicates the transit route a transit rider is riding, when a transit rider passes through a transit barrier, and when the transit rider boards a bus. The system can use transit data to predict a rider's route, including transfer timings. The system can combine the transit data with purchasing preference data obtained from the transit rider's use of a contact-less prepaid, debit, or credit card to provide relevant local offers. Note that the system can use geofencing independent of the transit data, although the combination of geofencing and transit data is more precise.

Some embodiments of the present invention can also include a system for targeting motorists, and would similarly identify travel patterns (including vehicle location) and moments of receptivity (which includes a safe driving dimension) to target offers from merchants to drivers (including truckers) and passengers.

The sections below discuss figures illustrating an exemplary architecture of a local offer targeting and delivery system, an overview of the local offer targeting and delivery process, and a process for receiving merchant offer data. The disclosure below also includes processes for sending offers to potential customers in real-time mode and anticipated targeting mode, a process to be executed after a customer redeems an offer, a process to provide brokering and/or analytics services, an apparatus and exemplary computer system for local offer targeting and delivery, and an exemplary computer system for receiving local offers.

### System Architecture

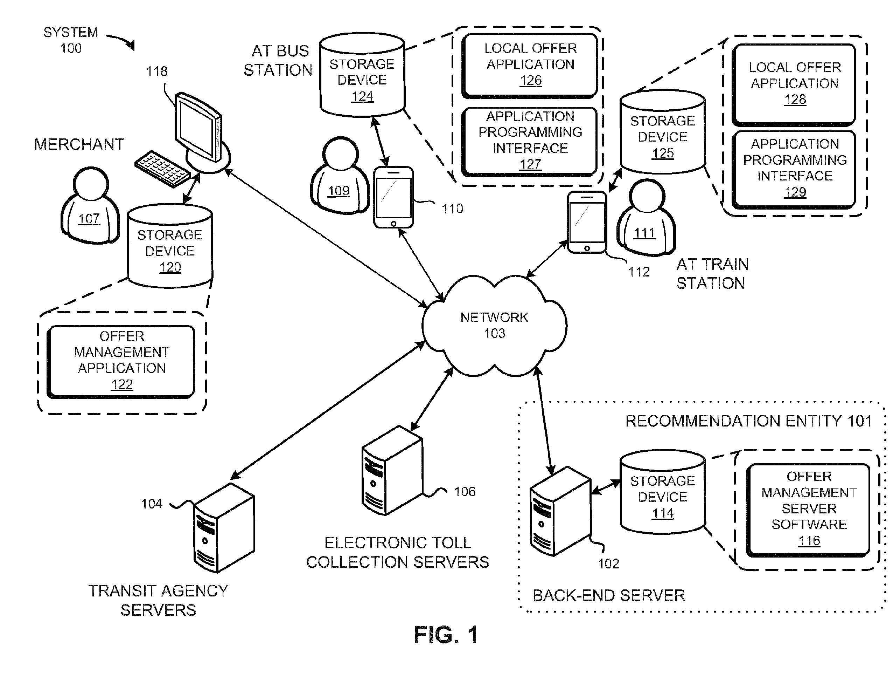

FIG. 1 presents a block diagram illustrating an exemplary architecture of a local offer targeting and delivery system 100, according to an embodiment. System 100 may include a recommendation entity 101 utilizing a back-end server 102 to provide local offer targeting, delivery, broker, and analytics services. Recommendation entity 101 is a business entity that agrees to provide local targeting and delivery services to merchants. Back-end server 102 serves mobile devices and merchants' computers and is communicatively coupled with other servers through a network 103. Back-end server 102 manages the offers received from merchants and sends them to potential customers. It provides most of the targeting and delivery functionality, and may obtain data from transit agency servers 104 and electronic toll collection servers 106 (and also other sources of data such as parking and commercial vehicle operators) to facilitate targeting and delivery functions. Note that back-end server 102 may be a cluster of servers with any number of machines.

A merchant 107 may operate merchant computer 118 to communicate with back-end server 102 to send offers to potential customers. Note the merchants may also utilize an offer broker to send offers to back-end server 102 and/or potential customers. Potential customers typically are transit riders, such as transit riders 109, 111, who possess mobile devices 110, 112, respectively. These mobile devices 110, 112 receive offers from back-end server 102. Electronic toll collection servers 106 provide location data that back-end server 102 may use in combination with GPS to locate potential customers, such as drivers and passengers in cars.

Back-end server 102 may include a storage device 114 that stores offer management server software 116. In some implementations, offer management server software 116 can include a recommendation engine that executes most of the local targeting functions. This recommendation engine may match up offers in real-time to potential customers who are nearby and physically able to redeem an offer and complete a transaction within a specified validity time period of the offer.

Transit agency servers 104 can be any servers associated with public transportation agencies. They can provide data regarding transit riders that are potential customers, such as people who have opted in to receive local offers. Back-end server 102 may receive data from transit agency servers 104 indicating their use of the public transport system, including data from a fare collection system, use of credit card to pay fares, etc. In some implementations, back-end server 102 may obtain targeting data (e.g., credit/debit card usage) associated with retail locations from a server that manages the accounts of prepaid users for an issuing bank.

Merchant computer 118 may include a storage device 120 storing offer management application 122. Offer management application 122 allows the merchant to register with back-end server 102, in order to market the merchant's products and/or services to potential customers in a local area. Note that merchant 107 can be running any type of business, including restaurants, salons, convenience stores, cafés, or any other businesses that sells goods and services to consumers. Merchants can make instant marketing decisions based on real-time excess capacity and perishable inventory, such as seats in a restaurant during lunch hour or prepared foods that need to be discarded after a certain period of time. In various implementations, merchant computer 118 can send recurring or instant offers via a website or mobile application to back-end server 102.

Potential customers may be, for example, public transit riders 109, 111. In some implementations, transit riders may sign up for a local offer and register a credit card with both the transit agency and back-end server 102. The credit card may have a contactless chip in it that debits their fare (e.g., when boarding a bus or passing through a subway turnstile). This provides data indicating how the transit rider is utilizing the transit system, including, for example, when the transit rider boards a bus, exits a bus, enters a subway, or exits a subway. Transit agency servers 104 transmit this data to back-end server 102, thereby allowing back-end server 102 to target and deliver coupons to the transit riders during their moments of receptivity while utilizing the transit system.

Transit riders may possess a mobile device, such as mobile devices 110, 112. Mobile devices 110, 112 can each be a mobile phone, tablet, or any other type of mobile device. Mobile devices 110, 112 may each include a respective storage device 124, 125 that stores a respective local offer application 126, 128, and a respective application programming interface 127, 129. Application programming interfaces 127, 129 receive offers and perform other functions. Mobile devices 110, 112 also include GPS capabilities that facilitate geofencing. Transit riders 109, 111 may receive local offers by using mobile devices 110, 112 to register themselves with back-end server 102. Public transit riders are good candidates for receiving local offers because they tend to be located at and travel along a fixed route, so at a given time back-end server 102 may estimate their location with relative accuracy. Also, commuters tend to travel along a fixed route every day.

Local offer applications 126, 128 provide location data, receive offers, process redeemed offers, and provide real-time transit information. Note that, depending on implementation, customers may also redeem offers using credit/debit cards, or using any other methods for offer redemption. Real-time transit information includes transit schedules, transit fares, and other information that travelers may use to plan their trips. Depending on implementation, real-time transit information may be received from any source that provides such data, such as transit agency servers 104, or the information may be received through back-end server 102 or any other server. Local offer applications 126, 128 may access the mobile device's GPS information and send the data to back-end server 102 (or transit agency servers 104, or a wireless carrier service) to facilitate geofencing. Local offer applications 126, 128 receive offers from merchants and other businesses, such as merchant 118, and can store history information for offers. For example, an offer may be "20% off purchase of any item at the café next to the bus station." The merchants send the offers through back-end server 102 to the local offer applications 126, 128. Potential customers may receive and view these offers while they are viewing their mobile devices to find out when their bus or train is coming. If a potential customer decides to visit the merchant's business and use the coupon/voucher, he or she can also use the local offer application to process and redeem the coupon/voucher.

Local offer applications 126, 128 can provide real-time transit status and schedule information, such as bus, ferry, train, subway, taxi, and other public transportation schedule information. For example, mobile device owners 109, 111 can determine that a bus is two minutes late, and can visually follow the bus on a map using the local offer applications 126, 128, respectively. Local offer applications 126, 128 may obtain real-time public transit data from transit agency servers 104. The access to the real-time public transit schedule and status data serves as an incentive for the transit rider to install the local offer application. Furthermore, transit riders probably want to check on the status of their bus or train multiple times, thereby creating more opportunities for them to view the offers.

Note that various implementations of the present invention may include any number of servers and storage devices. Various inventive aspects of system 100 are further described below, including details regarding how back-end server 102 facilitates local offer targeting for merchants. Also, the sections below detail the process by which back-end server 102 generates and sends offers to applications executing on mobile devices.

Note that although FIG. 1 illustrates application program interfaces 127, 129 located on mobile devices, various implementations may also include aspects of the application programming interfaces located on merchant computer 118, transit agency servers 104, electronic toll collection servers 106, and/or back-end server 102. Embodiments of the present invention are not limited to any particular usage of application programming interfaces.

Although examples are discussed herein with one merchant, embodiments of the present invention may allow any number of merchants to interface with back-end server 102 to facilitate local offer targeting and delivery. Furthermore, different implementations may have order of operations that vary from the order disclosed in the flowcharts. Embodiments of the present invention are not limited to the order of operations presented in the disclosed flowcharts.

### Local Offer Targeting Process

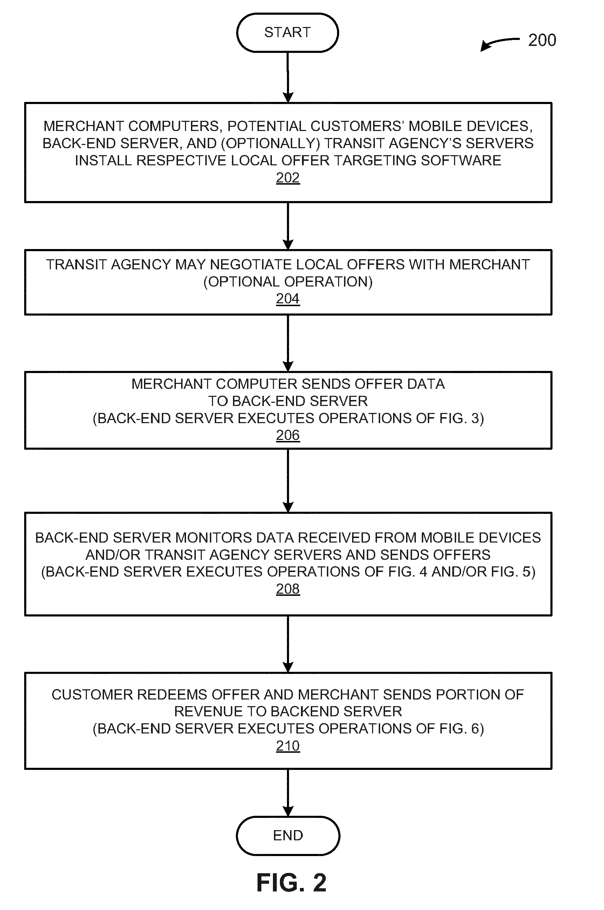

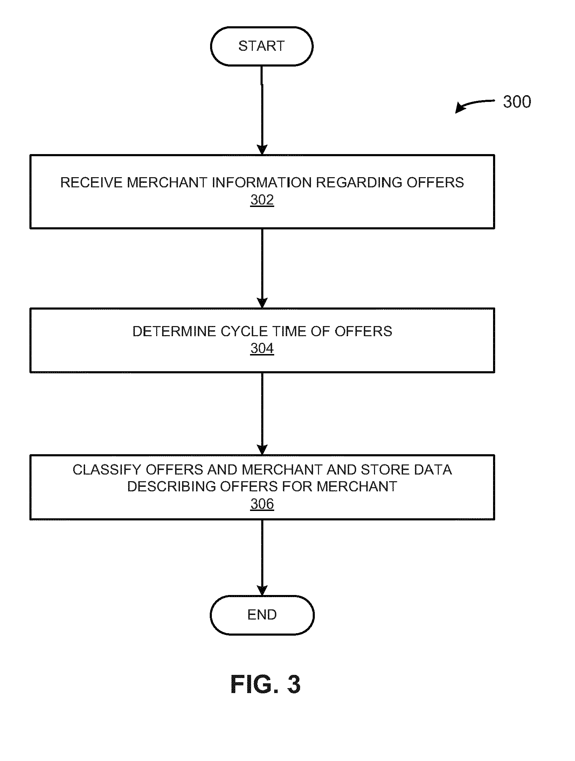

FIG. 2 presents a flowchart illustrating an overview of an exemplary process for local offer targeting, according to an embodiment. Back-end server 102, transit agency servers 104, mobile devices 110, 112 and merchant computer 118 may execute various operations of FIG. 2. During operation, back-end server 102, transit agency servers 104, mobile devices 110, 112 and merchant computer 118 initially install on the respective machines software for implementing local offer targeting (operation 202). Note that various embodiments may also include cloud-based implementations where users access local offer targeting services in the cloud. Next, transit agencies may optionally negotiate local offers with merchants (operation 204). For example, a transit agency may agree to subsidize part of the cost of providing offers that have a validity time period during rush hour to potential customers (e.g., transit riders). In some implementations, transit agency servers 104 may include software to facilitate negotiation and/or communication with merchant computer118 regarding details of offers. Next, merchant computer 118 may send the offer data to back-end server 102 (operation 206). Back-end server 102 may execute steps illustrated in FIG. 3 to receive and store data sent from merchant computer 118.

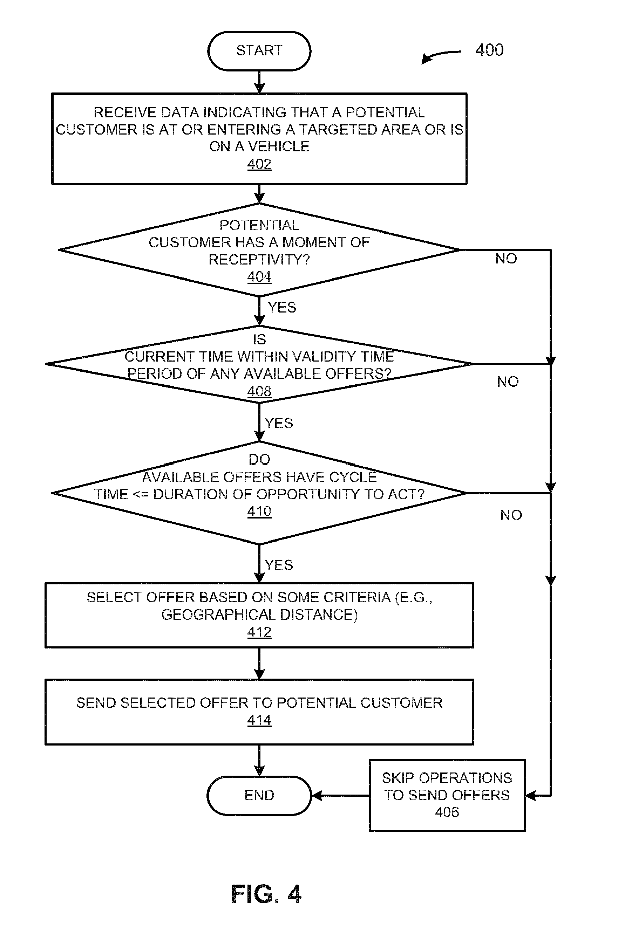

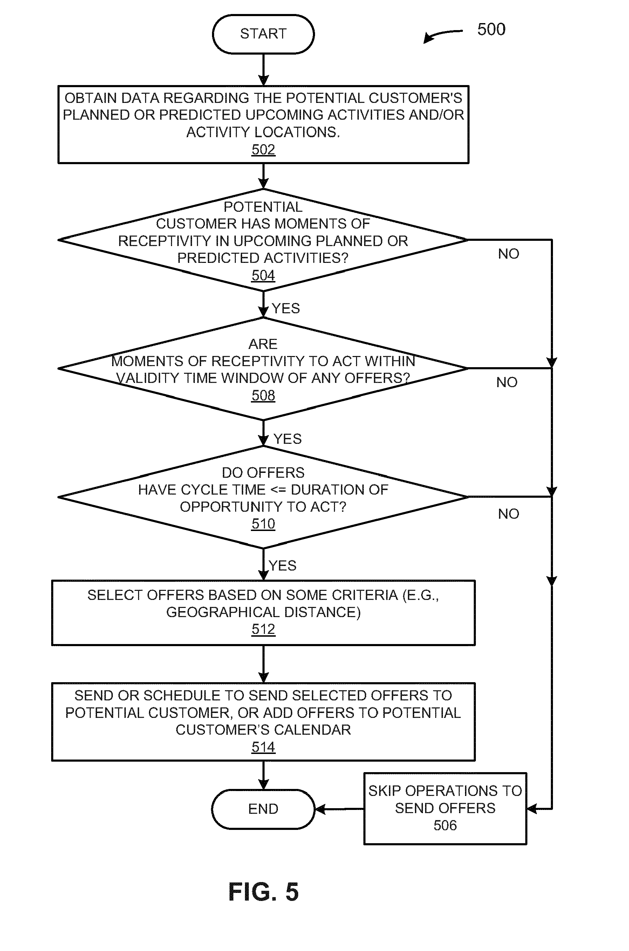

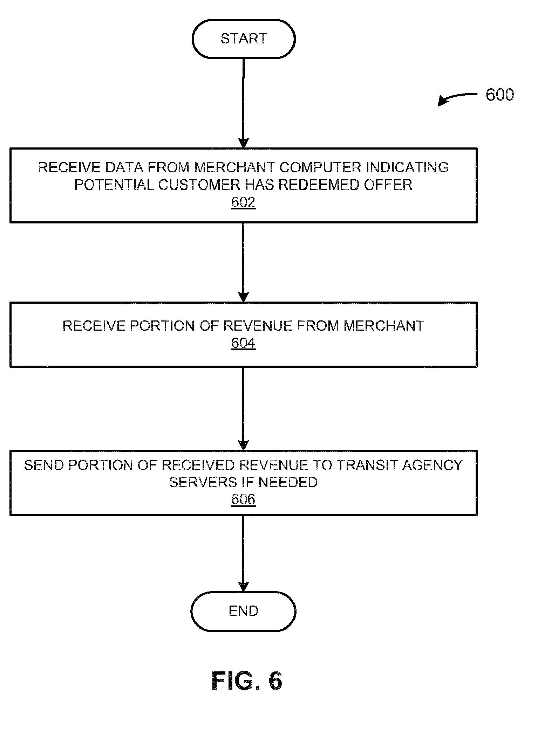

Back-end server 102 monitors data received from mobile devices and/or transit agency servers 104, and sends offers to the mobile devices belonging to the potential customers (operation 208). Back-end server 102 may send offers in real-time (e.g., real-time targeting mode) or send the offers in anticipation that a user may them later in the day (e.g., anticipated targeting mode). Back-end server 102 may execute steps illustrated in FIG. 4 and/or FIG. 5 to send offers to mobile devices. After the customer receives the offer, the customer can then redeem the offer. The customer may redeem an offer using a credit/debit/transit fare card. They may also purchase a prepaid voucher and redeem the voucher later. The merchant sends a portion of the revenue received from the customer to back-end server 102 (operation 210). Back-end server 102 may execute steps illustrated in FIG. 6 to receive revenue from merchants and possibly share revenue with transit agency servers.

Note that in various embodiments, back-end server 102 may receive revenue from merchant computer 118 at any time and in any order. Embodiments of the present invention are not limited to the order of operations illustrated in FIG. 2.

### Receiving Merchant Offer Data

FIG. 3 presents a flowchart illustrating an exemplary process for receiving and storing merchant offer data, according to an embodiment. Back-end server 102 may execute the steps of FIG. 3 to receive and store merchant data regarding offers. During operation, back-end server 102 receives merchant information regarding offers (operation 302). For example, back-end server 102 may receive the offer data from offer management application 122 executing on merchant computer 118. Back-end server 102 may receive data from merchant computer 118 regarding parameters of offers, including data such as validity time periods, estimated cycle time of the associated goods and/or services, and discounts.

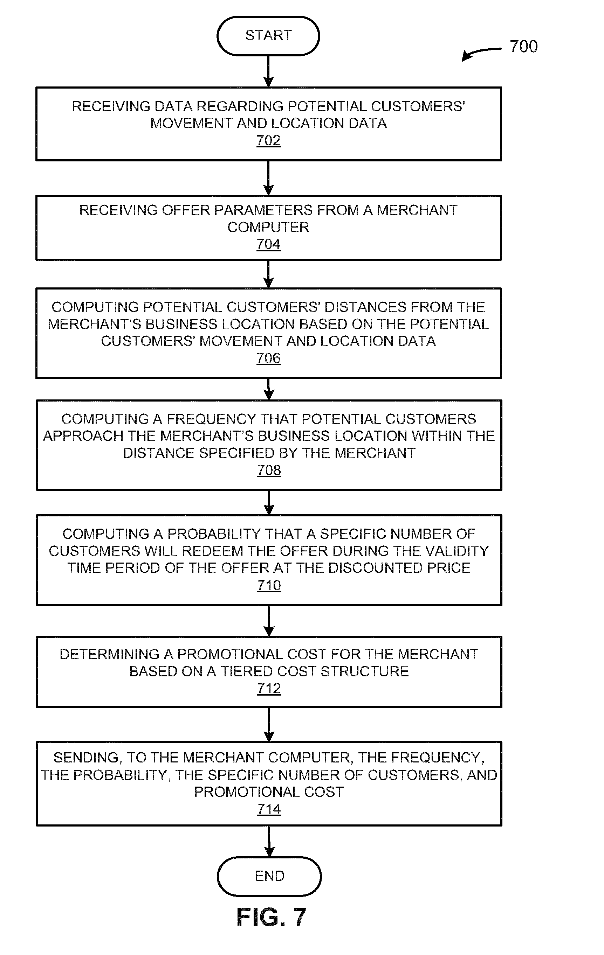

Back-end server 102 (or some other component) may provide advanced analytics services to merchants based on real-time data, to assist merchants in determining the most appropriate offer parameters. For example, back-end server 102 can estimate the number of people that may be able to redeem an offer with a particular validity time period and discount. Based on the merchant's input discount value, back-end server 102 can adjust the estimated number of people that may redeem the offer. For example, back-end server 102 may estimate that at 20% off, the merchant will get 8 customers, and that at 50% off, the merchant will get 12 customers. Back-end server 102 may provide details that allow merchants to evaluate their return on investment. Merchants may also specify a maximum budget for their promotional campaign or maximum number of people for specific coupons, and back-end server 102 can control the targeting and delivery so as to not exceed the maximum values. Additional analytics capabilities are discussed with respect to FIG. 7.

In some embodiments, back-end server 102 and/or merchant computer 118 may also store a number of default settings for offers, which can simplify the process for merchants and improve delivery automation. For example, a merchant can enter default settings that correspond to instructions such as "only send my default offer of 20% off all purchases during my off-peak period between 3-5 PM weekdays."

Next, back-end server 102 determines a cycle time of offers (operation 304). Depending on implementation, back-end server 102 may receive this information from the merchant with other offer data, or estimate the information based on industry data. For example, back-end server 102 may receive data from the merchant indicating that the typical time for a haircut is 30 minutes, and that the location of the business requires a 10 minute walk from the bus station. Also, back-end server 102 may analyze industry data to determine that typically haircuts require 30 minutes, and then analyze map data to determine that the business requires a 30 minute walk from the bus station. The system can also provide feedback to merchants about potential customers' receptivity to cycle time. For example, a merchant may become a member of an alliance that provides data such as whether it is important to customers that the merchant offers clothes ready to be picked up at a self-service counter, on a hook for clothes, or in a locker at a transit station.

Back-end server 102 may then classify offers and the merchant based on cycle time to facilitate efficient search and selection of offers, and store data describing cycle time of each offer for the merchant (operation 306). For example, the typical time required to get a coffee and pastry at a café in the station might be 15 minutes including wait time during the morning rush hour (7-9 am) and only 5 minutes during all other times when it is open. In addition, the maximum walking time from any point in the subway station to the café is 5 minutes. Therefore, back-end server 102 would classify the café as having a 20 minute cycle time from 7-9 am and 10 minute cycle time at all other times. Back-end server 102 then stores the offer data in storage device 114.

### Spending Offer with Real-Time Targeting

FIG. 4 presents a flowchart illustrating an exemplary process for sending an offer to a potential customer in real-time mode, according to an embodiment. The basic concept illustrated in FIG. 4 is to send offers to people who have some free time and may feasibly complete a purchase transaction during that period of free time. The free time should coincide with the time when a merchant wants more business. If the purchase transaction occurs during rush hour, that could also reduce congestion in public transportation.

Back-end server 102 may execute the steps of FIG. 4 to determine whether a potential customer should receive an offer and then send a selected offer to the potential customer. The system can detect a customer at or entering a targeted area and then determine whether the potential customer has a moment of receptivity. Alternatively, the system may also compute whether the potential customer has a moment of receptivity and then search for offers in the area near the potential customer. An exemplary sequence of operations is described below, although the order of operations may vary depending on implementation.

During operation, back-end server 102 may initially receive data indicating that a potential customer is at or entering a targeted area or is on a vehicle associated with one or more businesses providing offers (operation 402). Such a targeted area is typically some location near a merchant's place of business. This targeted area can be a transit point such as a transit terminal, a bus stop, or any other location. Usually the potential customer is expected to be around that targeted area and receptive to receiving an offer advertisement and acting on that offer. For example, back-end server 102 may receive a real-time communication from transit agency servers 104 that the potential customer has entered a transit terminal. Back-end server 102 may receive data indicating that the potential customer has entered a subway station by interfacing with a fare collection system at the station. Back-end server 102 may receive data indicating that the potential customer has boarded a bus at his/her typical stop near home, and back-end server 102 may predict he/she will exit the bus at a typical stop near work within a definable period of time. As another example, back-end server 102 may receive data from the mobile application on the user's mobile device indicating that the user has entered the subway (e.g., by comparing GPS coordinates with geofence perimeters). The potential customer can be on the way to a train station or nearby a train station. For new potential customers that register to receive local offers, back-end server 102 may also immediately determine whether the potential customer is at a transit point, in order to provide the new potential customer with offers.

Next, back-end server 102 determines whether the potential customer has a moment of receptivity for receiving an offer and a moment of receptivity for acting on an offer (operation 404). In one example, the potential customer has moments of receptivity for receiving an offer and acting on an offer if he or she must wait for public transportation. For example, the potential customer has the moments of receptivity for receiving and acting on the offer if a bus will not arrive for 15 minutes after the customer has arrived at his/her originating bus stop or if the bus will arrive at the destination stop 10 minutes early. Note that the moment of receptivity for receiving an offer and the moment of receptivity for acting on an offer can be at different times. However, for real-time targeting, the moment of receptivity for receiving an offer and the moment of receptivity for acting on an offer are typically closer together in time.

A potential customer may arrive early at a train station to make sure that they do not miss the train, and the waiting time can be a moment of receptivity for receiving an offer. The time period for transfer between train, subway, and/or bus can also be a moment of receptivity for receiving an offer. A moment of receptivity for receiving an offer can also be while a transit rider is riding a transit line (e.g., train, subway, or bus). The transit rider may receive an offer from a merchant located at a station or bus stop where the transit rider usually exits. In such cases, the cycle time would include the time duration required for the transit line to arrive at the exit. The cycle time can also include the time required to wait for the next available train if the potential customer decides to redeem an offer instead of taking the next immediate train.

Backend server 102 may estimate that the transit rider has a moment of receptivity for acting on an offer based on transit data indicating that, for example, the transit rider is usually commuting home at a particular time, or other data indicating that the transit rider usually eats at a restaurant shortly after exiting the transit line. Backend server 102 may also utilize other real-time transit status data to determine that a transit rider has an opportunity to act on the offer.

Back-end server 102 may estimate the time duration for a moment of receptivity for receiving an offer and/or acting on an offer based on real-time transit status data. As an example, back-end server 102 may receive data indicating that the potential customer has entered a subway station, and, based on real-time status updates from transit agency servers 104, estimates that the subway line will not arrive until 15 minutes later. 15 minutes is the time duration for the moments of receptivity for receiving an offer and acting on the offer because the potential customer would need to wait 15 minutes for the subway line. If back-end server 102 determines that the potential customer does not have moments of receptivity for receiving an offer and/or acting on an offer, then back-end server 102 would skip the operations to send offers by executing step 406.

Back-end server 102 may optionally analyze the current time (and possibly date) to determine whether the current time is within the validity time period of any available offers (operation 408). If the current time is not within the validity time period of any available offers, then back-end server 102 may skip operations to send an offer to the potential customer (operation 406). Note that step 408 is not necessary in some embodiments of the invention.

Subsequently, back-end server 102 may determine whether available offers have a cycle time that is less than or equal to the duration of time during which the potential customer has an opportunity to act on the offer (operation 410). Back-end server 102 may send an offer to a potential customer so long as the potential customer can arrive at the merchant's place of business by the start time of the validity time period, and can complete the purchase transaction within the time duration of the moment of receptivity for acting on an offer. Back-end server 102 may use the cycle time classifications to search for offers that can be completed within the time duration of the moment of receptivity for acting on an offer. For example, if the moment of receptivity for acting on an offer is 25 minutes, and purchasing a coffee at a café is classified as a 15 minute transaction with a 5 minute walk, then back-end server 102 may send the coupon for the café.

In another example, if back-end server 102 determines that a user has entered a station and has a 15 minutes for both moments of receptivity for receiving an offer and acting on an offer while waiting for a subway train at 3:30 pm, then back-end server 102 will send that user an offer from the café, such as "$1 off a pastry with the purchase of a coffee - valid only between 3-5 pm" (coupon example) or "buy a voucher for a coffee and pastry for $3, normal value $5 - valid only between 3-5 pm" (voucher example). However, if the same 15 minute moment of receptivity was at 8:30 am, then the system would not send that offer, for two reasons. First, there is no valid offer from the merchant for that time period, since both offers are only valid between 3-5pm. Second, the user cannot complete the transaction within the estimated waiting period, because from 7-9am the cycle time is 25 minutes.

If there are no offers that have a cycle time less than or equal to the time duration for the moment of receptivity for receiving an offer, back-end server 102 does not send an offer to the potential customer (operation 406). If there are one or more offers with a cycle time less than or equal to the time duration for the moment of receptivity for acting on an offer, then back-end server 102 selects (operation 412) and sends one or more offers to the potential customer (operation 414). Back-end server 102 may select offers based on some criteria. For example, back-end server may select offers based on geographical distance of the potential customer from the merchant's location. Back-end server 102 may send the offer to an application executing on a mobile device belonging to the potential customer.

Merchants can specify who should receive offers based on their history with the merchant. Back-end server 102 may send offers only to those potential customers that have not previously purchased a product or service from the merchant or a similar merchant in another area in the recent past (e.g., 1, 2, or 5 years, or 90 days). It may even limit offers to only those who have never purchased a product or service before from the merchant. Back-end server 102 may obtain data from a credit card company (and/or a bank that owns the data) to determine whether the potential customer has previously shopped at a merchant. In addition, the credit card may store data about the coupon, so that merchant computer 118 can automatically contact back-end server 102 to process the discount on the coupon when the customer uses the credit card.

In some implementations, back-end server 102 may also send offers for nearby parking to accompany the merchant's offer. Back-end server 102 may reserve a meter in a parking lot or on a street for the potential customer, and the potential customer may also immediately pay for the purchase transaction and/or metered parking.

### Spending an Offer with Anticipated Targeting

FIG. 5 presents a flowchart illustrating an exemplary process for sending an offer in anticipated targeting mode, according to an embodiment. Back-end server 102 may execute the steps of FIG. 5 to determine whether a potential customer receives offers adapted to his or her anticipated locations in the near future (e.g., throughout the day). Back-end server 102 may acquire data regarding the potential customer's daily commuting and/or other location-changing activities by data mining the transit agency server's database, or by accessing the potential customer's plans (e.g., electronic calendar, to-do list, or task reminder list), or by accessing data from the potential customer's spending on contactless cards, such as Southeastern Pennsylvania Transportation Authority's (SEPTA) electronic fare payment cards. The potential customer may opt in to receive such offers, and grant access to his or her plans. Back-end server 102 may utilize information in a plan to send relevant offers. Some examples of this information may include a reminder list with entries for celebrating an anniversary, dry cleaning, picking up dinner, and purchasing a birthday card. Back-end server 102 may send offers that are relevant to these plan entries.

With anticipated targeting mode, back-end server 102 may also learn a potential customer's typical commuting route in order to identify moments of receptivity (e.g., machine learning or any other learning techniques). If back-end server 102 detects a delay in the potential customer's typical commuting route (e.g., a delay of the train), back-end server 102 may identify this delay as a moment of receptivity for receiving an offer and a moment of receptivity for acting on an offer. Backend server 102 may derive many moments of receptivity from transit data. Back-end server 102 can then send the potential customer a message informing the potential customer that the commuter's train is delayed (e.g., 30 minute delay), and include an offer from a merchant located around the train station. Note that there may be unplanned delays and anticipated delays. Examples of unplanned delays are delays due to accidents or bad weather. Examples of anticipated delays are ballgames that attract a larger number of transit riders than usual. These delays, whether planned or unplanned, can be a moment of receptivity for receiving and/or a moment of receptivity for acting on an offer.

In one example, back-end server 102 can learn over time that on weekdays a commuter typically leaves the office at 5:20 pm and enters a subway station at 5:30 pm. She takes a subway to the train station and takes the 6:07 pm train that arrives at the train station where she parks her car at 6:40 pm. If back-end server 102 receives data indicating delays along her route, then it can send her a message when she is on the subway. For example, back-end server 102 can send a message indicating that the 6:07 pm train is delayed by 30 minutes, along with an offer from a merchant within the train station.

Alternatively, if back-end server 102 receives data sufficiently ahead of time indicating that the commuter's train will be delayed, it can send her an offer while she is still in the office for a dinner special at a restaurant near her office. Another option is in the morning, before she leaves home, back-end server 102 could send her an offer for a dinner special at a restaurant near her office and she can decide at that point whether to change her evening plans and call up some friends to meet for dinner. In some implementations, users may also voluntarily provide data regarding their commuting habits through their mobile applications in order to receive local offers.

Back-end server 102 initially obtains data regarding the potential customer's planned or predicted upcoming activities and/or activity locations. This may include to do list, task reminder list, or predicted activities and/or activity locations (operation 502). Back-end server 102 may data mine the transit agency's database or receive access from the customer to access a list of activities. For example, back-end server 102 may have access to the potential customer's daily calendar, which indicates what the potential customer is planning to do throughout the day.

Next, back-end server 102 determines whether the potential customer has moments of receptivity for receiving offers and moments of receptivity for acting on offers in their upcoming planned or predicted activities (operation 504). In some scenarios, the potential customer has a moment of receptivity for receiving an offer and/or a moment of receptivity for acting on an offer if there appears to be available idle time during his or her day. For example, there is a moment of receptivity for receiving an offer and/or a moment of receptivity for acting on an offer if back-end server 102 determines that there is a delay in the potential customer's usual commuting route. If so, then the time duration of the moments of receptivity (e.g., for receiving an offer and/or for acting on an offer) may be the predicted delay time. Moments of receptivity for receiving an offer and/or for acting on an offer can also occur due to different events or for different reasons. For example, moments of receptivity for receiving an offer and/or for acting on an offer can arise from impacts of special events or normal short or micro waiting periods. A moment of receptivity can also arise from the appeal of an offer combined with the availability of another bus/train in a reasonable time. In some implementations, back-end server 102 may also assume that the customer has moments of receptivity at certain times, such as during lunch hour or dinner hour. Back-end server 102 may estimate the time duration for the moments of receptivity. If back-end server 102 determines that the potential customer does not have any moments of receptivity, then back-end server 102 would skip the operations to send offers by executing step 506 (operation 506).

Back-end server 102 may optionally analyze the time of each of the moments of receptivity for acting on an offer to determine whether they are within the validity time period of any offers (operation 508). Backend server 102 may send an offer to a potential customer prior to the validity time period of the offer, and the potential customer may subsequently use the offer during the validity time period of the offer. If the times of the moments of receptivity for acting on an offer are not within the validity time period of any offers, then back-end server 102 may skip operations to send offers to the potential customer (operation 506). If the times for the moments of receptivity for acting on an offer are within the validity time period of one or more available offers, back-end server 102 may then determine whether the available offers have a cycle time that is less than or equal to the time duration for the moments of receptivity for acting on an offer (operation 510). If there are no offers that have a cycle time less than or equal to the time durations for the moments of receptivity for acting on an offer, back-end server 102 does not send an offer to the potential customer (operation 506).

If there are one or more offers with a cycle time less than or equal to the time durations for the moments of receptivity for acting on an offer, then back-end server 102 selects one or more offers for the potential customer (operation 512). Back-end server 102 may select offers based on some criteria. For example, back-end server 102 may select offers based on geographical distance of the potential customer's anticipated future location from a merchant location. Back-end server 102 may also select offers based on relevance to the anticipated activities. For example, back-end server 102 may send offers for discounted flowers to someone who has an anniversary listed on a to do list. Back-end server 102 may send, or schedule to send, offers to an application (e.g., local offer application 126, 128) executing on a mobile device belonging to the potential customer (operation 514). In some implementations, back-end server 102 may also add offers to the potential customer's calendar.

Thus, a potential customer may potentially receive enough offers to match all of his moments of receptivity throughout the day, including commutes to work or home. This increases productivity, improves his customer experience, and possibly saves him some money. Furthermore, the transit agency may also benefit from less commuter congestion because the potential customer may decide to redeem a coupon after work and take a later train or bus.

### Process After Offer Redemption

FIG. 6 presents a flowchart illustrating an exemplary process executed after a customer redeems an offer, according to an embodiment. Back-end server 102 may execute the steps of FIG. 6 after a customer redeems an offer. During operation, back-end server 102 may initially receive data from merchant computer 118 indicating that the potential customer has redeemed an offer (operation 602). The potential customer may use their credit card to purchase a product or service. In some implementations, the credit card issuing bank can automatically credit the value of the coupon or voucher to the customer's account when posting the credit card transaction received from the merchant. Note that a credit card authorization and processing system can enforce the validity/expiration period, such that the redemption of offers is transparent to both the customer and merchant. For example, when the potential customer pays for his or her bill, the bill shows the offer discount and the customer pays the balance.

Next, back-end server 102 receives a portion of revenue from merchant computer 118 (operation 604). The merchant may have an agreement with recommendation entity 101 to give a percentage of the proceeds from each sale transaction with each customer, or some other compensation model. Back-end server 102 may send the portion of the received revenue to transit agency server 104 if there is also a compensation agreement with the transit agency (operation 606). In some implementations, merchant computer 118 may also directly transfer a percentage of revenue directly to transit agency server 104.

FIG. 7 presents a flowchart illustrating an exemplary process to provide brokering and/or analytics services for a merchant, according to an embodiment. Back-end server 102 may execute the steps of FIG. 7 to provide a merchant with brokering and real-time analytics services. Note that, in some implementations, a component other than back-end server 102 may perform the brokering operations illustrated in FIG. 7, since the brokering/analytics and targeting/delivery functionalities can be separately performed by different components, entities or parties.

Back-end server 102 can provide "what if" analyses and other analytics to provide estimates to merchants on offer redemption so that power users can set a certain discount amount and/or a maximum number of offers for distribution based on a projected number of redemptions. Merchants can also run A/B testing on various offer terms and times of day in order to optimize the offer delivery and resulting impact on sales.

Back-end server 102 can compute a promotional cost for the merchant's campaign based on factors including a distance measured from the merchant's business location, a discount price, a requested number of customers, a validity time period, requested revenue or profit, maximum number of offers for distribution, and/or other offer parameters. The distance can be a radial measure surrounding the merchant's business location that defines a circular region encircling some of the most desirable customers for the merchant. Potential customers that enter a targeted region defined by the merchant can become profitable customers, especially if the customers are entering the region with sufficient frequency. In some implementations, merchants can define any arbitrary region for targeting customers, besides circular regions surrounding the merchant's business location. Targeted locations can also be defined by any number of points, and can also be a linear route or a triangle-shaped region. Merchants may also choose to target customers at specific stops or stations (e.g., such that a merchant can add space advertising), or they may choose to target all locations or regions without limits.

During operation, back-end server 102 initially receives data regarding potential customers' movement and location data, such as current locations, historical travel patterns, and/or upcoming activities and respective locations (operation 702). Next, back-end server 102 receives offer parameters from merchant computer 118. These offer parameters may include one or more of a distance measured from the merchant's business location, discount price, requested number of customers, and a validity time period for an offer (operation 704). Subsequently, back-end server 102 computes potential customers' distances from the merchant's business location based on the potential customers' respective movement and location data (operation 706). Back-end server 102 then computes a frequency that potential customers approach the merchant's business location within the distance specified by the merchant (operation 708). For example, the potential customers may enter a region surrounding the business location (e.g., the region is defined by the distance value), 3 times a day, 5 times a week, or 10 times a month. Then, back-end server 102 computes a probability that a specific number of customers will redeem the offer during the validity time period of the offer at the discounted price (operation 710).

Subsequently, back-end server 102 determines a promotional cost for the merchant based on a tiered cost structure (operation 712). The promotional cost for a merchant's campaign may depend on the precision of the advertisement targeting and/or the likelihood that those being targeted will convert to being a repeat customer. For example, the merchant may want to target offers at potential customers who can be located within a one block radius of the business, and who frequently enters that region (e.g., more than 5 times per week). This campaign may cost more than another campaign that only targets offers at people within a 5 mile radius of the business, and the frequency of these potential customers entering the region is only twice a month. Back-end server 102 then sends, to the merchant computer, the frequency, probability, specific number of customers that will redeem the offer, and promotional cost (operation 714).

Back-end server 102 may also receive input from the merchant adjusting the offer parameters, and compute an estimated number of customers that will redeem the offer based on the adjusted offer parameters. Back-end server 102 then computes new promotional cost, and then sends, to the merchant computer, the estimated number of customers. Note that the merchant may adjust any offer parameters, including parameters such as an offer discount, a maximum number of customers, and/or validity time period of the offer. If the merchant is not as concerned with targeting specific people, they can set the offer parameters to encompass a broad number of people that may be located further away, and are less likely to travel by their business location. Depending on the promotional fee structure, this may reduce their promotional costs, but the likelihood of converting such potential customers into repeating customers may be reduced. Note that less targeted offers are typically less expensive per unit but may cost more due to the volume of prospects.

Back-end server 102 may also compute a recommended set of offer parameters that would (or is likely to) yield a number of customers willing to redeem the offer. Back-end server 102 may receive a requested average number of customers, minimum number of customers, and/or maximum number of customers and a time duration. Back-end server 102 may then compute a set of offer parameters that will yield, during the time duration, an average number of customers, minimum number of customers, or maximum number of customers that will redeem the offer. Subsequently, back-end server 102 computes a new promotional cost, and sends, to the merchant computer, the new promotional cost and the computed set of offer parameters.

In some implementations, back-end server 102 may also compare offers from multiple merchants to select an offer for promotion. Back-end server 102 may choose to promote offers that are most likely to be redeemed, or that would yield the most profit.

### Exemplary Apparatus

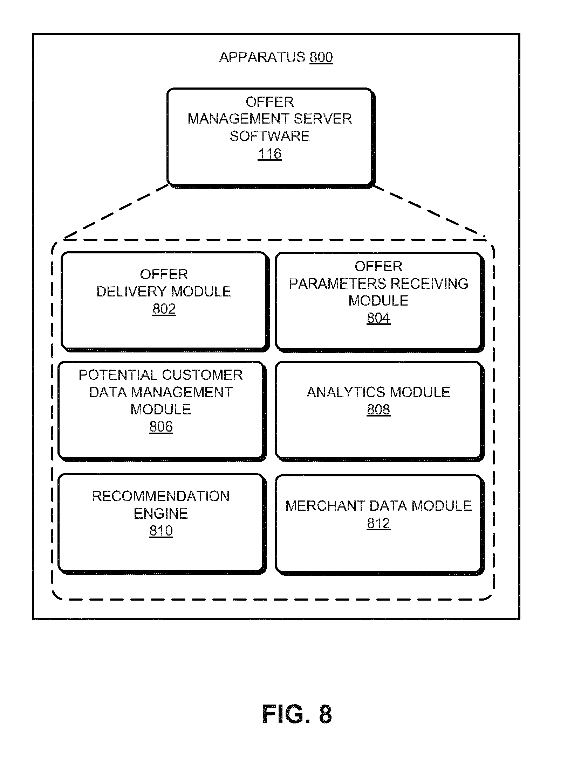

FIG. 8 presents a block diagram illustrating an exemplary apparatus 800 for local offer targeting and delivery, in accordance with an embodiment. Apparatus 800 can comprise a plurality of modules which may communicate with one another via a wired or wireless communication channel. Apparatus 800 may be realized using one or more integrated circuits, and may include fewer or more modules than those shown in FIG. 8. Further, apparatus 800 may be integrated in a computer system, or realized as a separate device which is capable of communicating with other computer systems and/or devices.

Specifically, apparatus 800 can comprise offer management server software 116, which includes an offer delivery module 802, offer parameters receiving module 804, potential customer data management module 806, analytics module 808, recommendation engine 810, and merchant data module 812. Note that apparatus 800 may also include additional modules not depicted in FIG. 8, and different implementations may arrange functionality according to a different set of modules. Embodiments of the present invention are not limited to any particular arrangement of modules. For example, some implementations may incorporate some or all of the functionality provided by the depicted modules into a single recommendation engine.

Offer delivery module 802 delivers offers to local offer applications 126, 128. Offer parameters receiving module 804 interfaces with merchant computer 118 and receives offer parameters. Potential customer data management module 806 manages data regarding potential customers, including their e-mail addresses, opt in data, and other profile data. Analytics module 808 provides analytics functionality as disclosed herein to assist merchants with fine-tuning their offer parameters strategy to achieve optimal results. Recommendation engine 810 provides the core functionality to facilitate local offer targeting and delivery. Recommendation engine 810 may execute operations illustrated in FIG. 3 to FIG. 6. Merchant data module 812 manages data regarding merchants, including their logon identifiers, email addresses, settings, etc.

### Exemplary Back-End Server Computer System

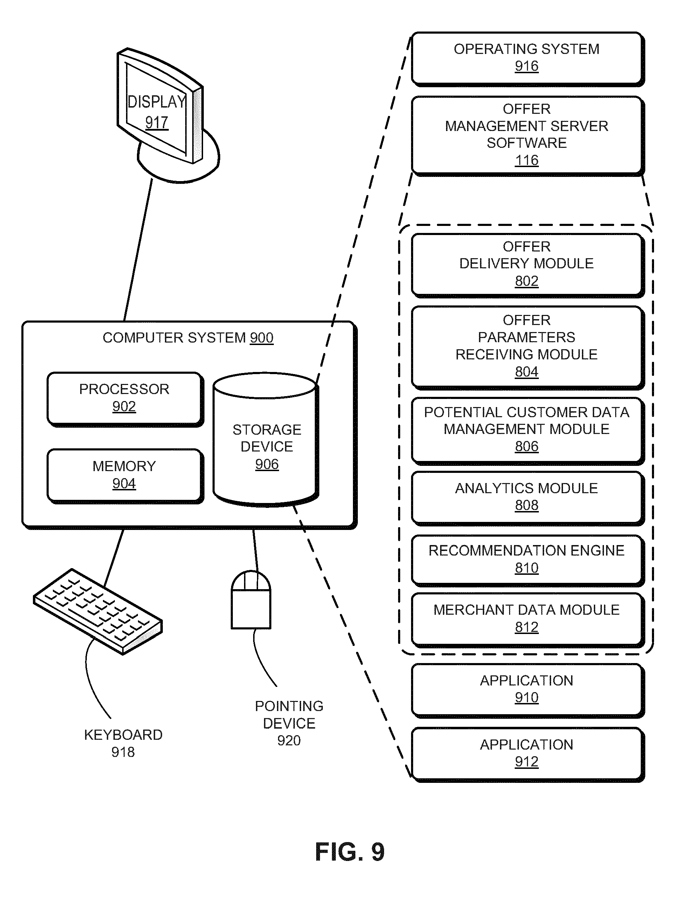

FIG. 9 illustrates an exemplary computer system 900 that facilitates local offer targeting and delivery, in accordance with an embodiment. Computer system 900 may be an example of back-end server 102. In one embodiment, computer system 900 includes a processor 902, a memory 904, and a storage device 906. Storage device 906 stores a number of applications, such as applications 910 and 912 and operating system 916. Storage device 906 also stores offer management server software 116, which may include offer delivery module 802, offer parameters receiving module 804, potential customer data management module 806, analytics module 808, recommendation engine 810, and merchant data module 812. During operation, one or more applications, such as offer management server software 116, are loaded from storage device 906 into memory 904 and then executed by processor 902. While executing the program, processor 902 performs the aforementioned functions. Computer and communication system 900 may be coupled to an optional display 917, keyboard 918, and pointing device 920.

### Exemplary Mobile Device System

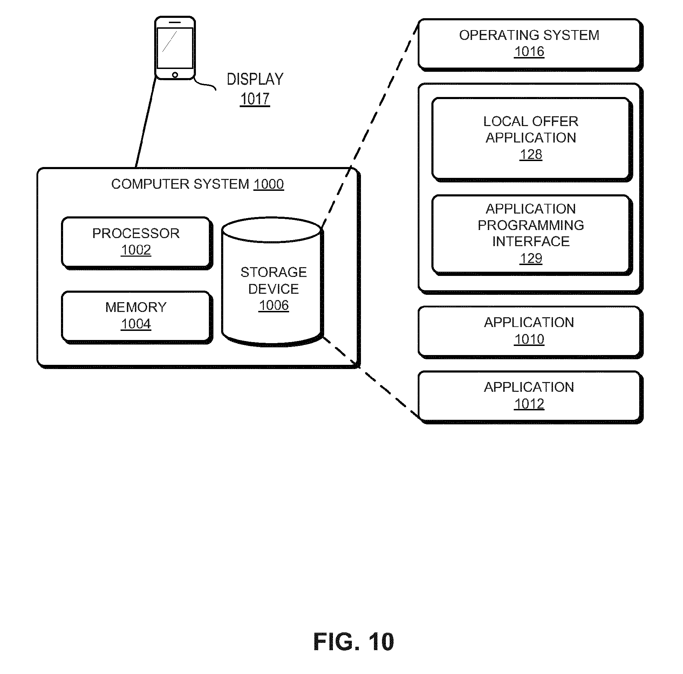

FIG. 10 illustrates an exemplary computer system 1000 that receives local offers, in accordance with an embodiment. Computer system 1000 may be an example of mobile devices 110, 112. In one embodiment, computer system 1000 includes a processor 1002, a memory 1004, and a storage device 1006. Storage device 1006 stores a number of applications, such as applications 1010 and 1012 and operating system 1016. Storage device 1006 also stores components that executes processes associated with receiving local offers, such as local offer application 128 and application program interface 129. During operation, one or more applications, such as local offer application 128 and application program interface 129, are loaded from storage device 1006 into memory 1004 and then executed by processor 1002. While executing the program, processor 1002 performs the aforementioned functions. Computer and communication system 1000 is coupled to a display 1017.

The data structures and code described in this detailed description are typically stored on a computer-readable storage medium, which may be any device or medium that can store code and/or data for use by a computer system. The computer-readable storage medium includes, but is not limited to, volatile memory, non-volatile memory, magnetic and optical storage devices such as disk drives, magnetic tape, CDs (compact discs), DVDs (digital versatile discs or digital video discs), or other media capable of storing computer-readable media now known or later developed.

The methods and processes described in the detailed description section can be embodied as code and/or data, which can be stored in a computer-readable storage medium as described above. When a computer system reads and executes the code and/or data stored on the computer-readable storage medium, the computer system performs the methods and processes embodied as data structures and code and stored within the computer-readable storage medium.

Furthermore, methods and processes described herein can be included in hardware modules or apparatus. These modules or apparatus may include, but are not limited to, an application-specific integrated circuit (ASIC) chip, a field-programmable gate array (FPGA), a dedicated or shared processor that executes a particular software module or a piece of code at a particular time, and/or other programmable-logic devices now known or later developed. When the hardware modules or apparatus are activated, they perform the methods and processes included within them.

The foregoing descriptions of various embodiments have been presented only for purposes of illustration and description. They are not intended to be exhaustive or to limit the present invention to the forms disclosed. Accordingly, many modifications and variations will be apparent to practitioners skilled in the art. Additionally, the above disclosure is not intended to limit the present invention.

## Claims

1. A computer-executable method for delivering an offer to a mobile device associated with a potential customer, comprising:
receiving data indicating that a potential customer is at or entering a targeted area or is on a vehicle associated with one or more businesses providing offers;
determining, with the received data, whether the potential customer has a moment of receptivity, wherein the moment of receptivity is a period of time during which the potential customer is likely to be receptive to receiving an offer;
responsive to determining that the potential customer has a moment of receptivity for receiving an offer, selecting an offer from one or more available offers; and
sending the selected offer to the potential customer.

2. The method of claim 1, wherein selecting an offer comprises:
determining whether the potential customer has a duration of time during which the potential customer has an opportunity to act on the offer;
determining whether there are one or more available offers that are each associated with a respective cycle time that is of a duration less than or equal to the duration of time during which the potential customer has the opportunity to act on the offer, wherein the cycle time is the sum of time required to arrive at a respective business location associated with an offer plus the time required to perform a purchase transaction with the offer; and
selecting an offer associated with a cycle time with duration less than or equal to the duration of time during which the potential customer has the opportunity to act on the offer.

3. The method of claim 2, wherein determining whether the potential customer has a moment of receptivity for receiving an offer and/or a duration of time during which the potential customer has an opportunity to act on the offer comprises receiving data from a transit system server indicating that the potential customer has paid a fare to board a vehicle or to enter a paid transit zone and at least one of:
receiving data indicating that a public transportation vehicle is delayed,
estimating that the potential customer must wait for the public transportation vehicle for a period of time, or
receiving data indicating that the potential customer is waiting on the vehicle while the vehicle is in motion.

4. The method of claim 2, further comprising classifying merchants and/or offers based on cycle time to facilitate selection of offers with respective cycle times that are less than or equal to the duration of time during which the potential customer has the opportunity to act on the offer.

5. The method of claim 2, wherein determining whether the potential customer has a moment of receptivity for receiving an offer comprises receiving transit route data to predict a location of the potential customer and using geofencing data from an application executing on a mobile device to confirm the potential customer is at the location and at least one of:
receiving data indicating that a public transportation vehicle is delayed, or
estimating that the potential customer must wait for the public transportation vehicle for a period of time.

6. A computer-executable method for delivering an offer to a mobile device associated with a potential customer, comprising:
obtaining data regarding the potential customer's upcoming activity and location and time associated with the activity;
determining whether the potential customer has a present or upcoming moment of receptivity for receiving an offer, wherein the moment of receptivity is a period of time during which the potential customer is likely to be receptive to receiving an offer;
responsive to determining that the potential customer has a present or upcoming moment of receptivity for receiving an offer, selecting an offer from one or more offers; and
sending and/or scheduling to send the selected offer to the potential customer during the moment of receptivity for receiving an offer.

7. The method of claim 6, wherein selecting an offer comprises:
determining whether the potential customer has a moment of receptivity for acting on an offer during the upcoming activity;
determining whether a time of occurrence associated with the moment of receptivity for acting on an offer is within a validity time period of one or more offers, wherein the validity time period is associated with a start time and an end time;
determining whether the one or more offers are each associated with a respective cycle time that is less than or equal to a time duration associated with the moment of receptivity for acting on an offer, wherein the respective cycle time is the sum of time required to arrive at a respective business location associated with an offer plus the time required to perform a purchase transaction with the offer; and
selecting an offer with a cycle time with duration less than or equal to the time duration associated with the moment of receptivity for acting on an offer.

8. The method of claim 7, wherein the upcoming activity is riding public transportation, and the moment of receptivity for acting on an offer is associated with a delay in the public transportation schedule.

9. A computer-readable storage medium storing instructions that when executed by a computer cause the computer to perform a method for delivering an offer to a mobile device associated with a potential customer, comprising:
receiving data indicating that a potential customer is at or entering a targeted area or is on a vehicle associated with one or more businesses providing offers;
determining, with the received data, whether the potential customer has a moment of receptivity, wherein the moment of receptivity is a period of time during which the potential customer is likely to be receptive to receiving an offer;
responsive to determining that the potential customer has a moment of receptivity for receiving an offer, selecting an offer from one or more available offers; and
sending the selected offer to the potential customer.

10. A computing system for delivering an offer to a mobile device associated with a potential customer, the system comprising:
one or more processors,
a computer-readable medium coupled to the one or more processors having instructions stored thereon that, when executed by the one or more processors, cause the one or more processors to perform operations comprising:
receiving data indicating that a potential customer is at or entering a targeted area or is on a vehicle associated with one or more businesses providing offers;
determining, with the received data, whether the potential customer has a moment of receptivity, wherein the moment of receptivity is a period of time during which the potential customer is likely to be its receptive to receiving an offer;
responsive to determining that the potential customer has a moment of receptivity for receiving an offer, selecting an offer from the one or more available offers; and
sending the selected offer to the potential customer.
